# EUROPEAN PATENT APPLICATION

(11) **EP 3 958 144 A1**
(43) Date of publication of application: **23.02.2022**
(21) Application number: 20191772.1
(22) Date of filing: 19.08.2020
(51) Int. Cl.: G06F 16/27

(54) **BLOCKCHAIN BLOCKS STORAGE MANAGEMENT**

(71) Applicant: Siemens Aktiengesellschaft, 80333 München (DE)
(72) Inventor: Sauer, Markus, 81739 München (DE); Singh, Saurabh Narayan, 81739 München (DE)

(57) **Abstract**

The present invention relates to a method (3000) for managing storage of blocks (1110) of a distributed database (1100), the method comprising: a step of obtaining (S3100) one or more storage rules for defining use of local storage (2211) of a computing node (2210) of the distributed database, a step of generating (S3200) a new block (1110), a step of storing (S3300) the new block (1110), wherein the step of storing (S3300) the new block (1110) comprises: a second step of storing (S3310) the new block (1110) in the local storage (2211) of the computing node (2210), a step of evaluating (S3320) use of the local storage (2211) based on the one or more storage rules, and based on a result of the evaluating step (S3320), a step of copying (S3330) one or more blocks (1100), prior to the new block (1110), to a preferably distributed common storage (2230).

## Description

### Technical Field

The present invention generally relates to the field of distributed databases, for instance to the field of blockchains. In particular the invention relates to techniques for allowing an improved use of computational resources for the storing and/or accessing of blocks of a distributed database, for instance a blockchain.

### State of the art

Distributed databases, for instance blockchains, are known in the prior art. In the following, the term blockchain might be used to indicate a specific example of a distributed database. It will be understood that whenever the term blockchain is indicated, any other kind of distributed database might also be intended.

Known blockchain implementations are centred on the concept of data retention and immutability. Everything written to the blockchain, such as create operation, updates, in general every event, is never deleted.

This provides some advantages of the blockchain, namely auditability and immutability. However, this also has disadvantages. In particular, the size of an operational network tremendously increases over time. This also results in several side effects such as an increased time for synchronization, an increased amount of storage, etc.

As an example, the size of bitcoin public network is currently so large that it takes multiple days for a new node to sync all the data before it can start performing a transaction. Similar issues apply to Ethereum and many other public blockchain networks as well as several private blockchains, for example Hyperledger Fabric. With the same kind of transaction rate as a public blockchain, the world state of Hyperledger Fabric would grow immensely.

Maintaining such a large storage is not practical for a common user who wants to run the application on top of blockchain and wants some control over the data but not necessarily has the capabilities to handle multiple Tera bytes of data. Storage costs can be very high. Cloud transaction charges, reflecting every transaction in every block and the compute operations would be very high as well.

Even for professional users, the costs associated with the ever expanding size and the requirement to obtain a copy of the entire blockchain are major issues and results in severe costs for computational resources such as storage space and computational power.

As mentioned, increased storage requirements is not the only disadvantage deriving from the ever-growing size. New transactions get slower, and so does the update operations and the read operations.

These are some of the reasons behind a still not so widespread adoption of blockchain.

Some current approaches are known to try to overcome those issues, like sharding or side chains. In sharding, rather than storing the data in its entirety across all nodes, some parts or shards of the data are stored on multiple nodes, making data redundancy lower and providing a lower availability promise. This leads to an uneven read consistency across nodes. Moreover, since the data is still synced across all nodes, storage requirements remain high. Inside chains transactions pertinent to certain nodes are moved to a separate blockchain which is parallel to the main network. This leads to lesser transactions on the main chain but also leads to lesser visibility on the main chain regarding the operations happening on the side chains. Moreover, this still does not solve the size issue, since all nodes in the main network still store a high amount of data.

In general, those technologies do not solve the general incremental growth problem, but only slow down the increase in growth. That is, both approaches only shift the occurrence of the issue to a later point in time.

It would therefore be beneficial to provide techniques for managing a blockchain which allow lowering the storage and computational requirements while maintaining the advantages associates to the auditability and immutability of the blockchain.

### Summary of the invention

The invention is based on the general consideration that it is possible to store only a subset of the distributed database, or blockchain, at computing nodes, so that the storage requirements, the syncing and computing efforts, are drastically reduced for those nodes, which might even form the majority of nodes in the network.

At the same time, older blocks can be maintained in common storage nodes, which might also be implemented in a distributed manner. By lowering the number of complete copies of the blockchain it is thus possible to overcome the problems identified above.

In particular, a first aspect can relate to a method for managing storage of blocks of a distributed database, the method comprising: a step of obtaining one or more storage rules for defining use of local storage of a computing node of the distributed database, a step of generating a new block, a step of storing the new block, wherein the step of storing the new block comprises: a second step of storing the new block in the local storage of the computing node, a step of evaluating use of the local storage based on the one or more storage rules, and based on a result of the evaluating step, a step of copying one or more blocks, prior to the new block, to a preferably distributed common storage.

A second aspect can further comprise: a step of removing from the local storage the one or more blocks copied to the distributed common storage.

In a third aspect, the step of removing can further comprise: a step of acknowledging that the one or more blocks have been successfully copied to the distributed common storage, and a second step of removing from the local storage the one or more blocks copied to the distributed common storage.

In a fourth aspect, the step of copying can comprise: a step of identifying the one or more blocks to be stored in the distributed common storage based on the one or more storage rules, and a second step of copying the one or more blocks identified at the identifying step to the distributed common storage.

In a fifth aspect, the step of copying can comprise: a second step of evaluating whether the one or more storage rules storage capabilities are common to a plurality of computing nodes of the distributed database, and based on a result of the second evaluating step, a second step of identifying the one or more blocks to be stored in the distributed common storage based on the one or more storage rules, or a step of selecting one of the plurality of computing nodes, a step of identifying the one or more blocks to be stored in the distributed common storage by the selected computing node, a step of voting on the one or more blocks to be stored in the distributed common storage, and based on a result of the voting step, a step of signing on the one or more blocks to be stored in the distributed common storage, and a second step of copying the one or more blocks signed at the signing step to the distributed common storage.

In a sixth aspect the step of generating the new block can comprise: a third step of evaluating whether a transaction to be recorded in the new block is dependent on a state of the distributed database, and based on a result of the third evaluating step, a second step of generating the new block, or a fourth step of evaluating whether the state of the distributed database on which the transaction is dependent on is stored in the local storage.

In a seventh aspect, based on a result of the fourth evaluating step, the step of generating the new block can further comprise a step of reading the state of the distributed database from the local storage, or a second step of reading the state of the distributed database from the distributed common storage.

In an eight aspect, based on a result of the fourth evaluating step, the step of generating the new block can further comprise a step of updating the state of the distributed database on the local storage, or a second step of reading the state of the distributed database from the distributed common storage, and a step of updating the state of the distributed database on the local storage.

In a ninth aspect the second step of reading can comprise a fifth step of evaluating whether the state of the distributed database is stored in a cache of the distributed common storage, and based on a result of the fifth evaluating step, a third step of reading the state of the distributed database from the cache, or a fourth step of reading the state of the distributed database from the distributed common storage, and a step of copying the state of the distributed database to the cache.

An additional tenth aspect can relate to a method for managing storage of blocks of a distributed database, the method comprising: a step of joining a distributed network (2200A, 2200B) by a computing node of the distributed database, a step of obtaining one or more storage rules for defining use of a local storage of the computing node, a step of downloading one or more blocks of the distributed database from a distributed common storage based on the one or more storage rules.

An eleventh aspect can further comprise: a step of granting read access of the distributed common storage to the computing node.

In a twelfth aspect, the one or more storage rules can comprise at least one of: a maximum amount of blocks to be stored in the local storage, MAX_{SN}, a minimum amount of blocks stored in the local storage after which blocks can be stored in the distributed common storage, MIN_{SN}, an address of the distributed common storage, a size of a cache of the distributed common storage.

Further aspects can relate to software products, for instance in the form of instructions recorded on a recording medium, configured to implement any of the aspects described above.

Further additional aspects can relate a computing device comprising at least a memory and a processor, the memory comprising the instructions configured to cause the processor to implement any of the aspects described above.

### Brief description of the drawings

The foregoing and additional features and effects of the invention will become apparent from the following detailed description when read in conjunction with the accompanying drawings in which like reference numerals refer to like elements, and in which:
- Figure 1: schematically illustrates various blocks of a distributed database;
- Figure 2: schematically illustrates various nodes of a distributed network for implementing a distributed database;
- Figures 3 to 6: schematically illustrates various nodes of a network for implementing a distributed database;
- Figures 7 to 16: schematically illustrates various steps of a method for managing storage of blocks of a distributed database.

### Detailed description of preferred embodiments

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be illustrative only.

The drawings are to be regarded as being schematic representations, and elements illustrated in the drawings are not necessarily shown to scale. Rather, the various elements are represented such that their function and general purpose becomes apparent to a person skilled in the art. Any connection or coupling between functional blocks, devices, components of physical or functional units shown in the drawings and described hereinafter may also be implemented by an indirect connection or coupling. A coupling between components may be established over a wired or wireless connection. Functional blocks may be implemented in hardware, software, firmware, or a combination thereof.

Throughout the description, steps might be referred to as "first", "second", "third", etc. This is not intended to provide an ordering of the execution of the steps but it is merely meant to allow a differentiation of the steps when those have the same name, such as "storing step" and "second storing step".

Moreover, the presence of a "second storing step" as part of a different "storing step" is not necessarily intended to mean that information is stored twice, in the "storing step" and in the "second storing step", it could be that the "second storing step" is a more specific implementation, or a sub-part of the "storing step", as it will be more clear from the following description.

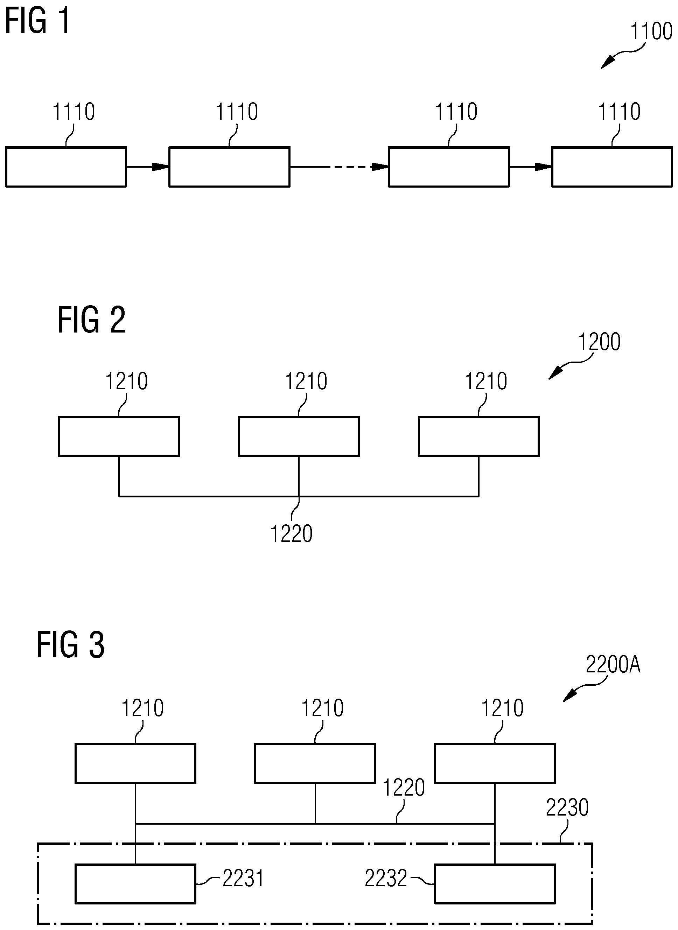

Figure 1 schematically illustrates various blocks 1110 of a distributed database. The blocks B₀, B₁ ... B_{N-1}, B_{N} are consecutive in time and keep growing as new transactions are recorded in the distributed database. Here by transaction it is intended any modification to the status of the distributed database.

Figure 2 schematically illustrates various computing nodes 1210 of a distributed network 1200 for implementing the distributed database 1100. In this exemplary implementation three computing nodes DDN₁, DDN₂ and DDN₃ are illustrated, it will however be clear that any number of computing nodes can be implemented. The computing nodes 1210 can generally be implemented by any computing device comprising at least a memory and a processor, such as, for instance, a PC, a smartphone, etc. The computing nodes 1210 are connected to each other through a network connection 1220. The network connection 1220 can be any kind of network allowing the computing nodes 1210 to communicate with each other, such as the Internet.

In general the computing nodes 1210 can both compute and store the blocks 1110. Storing all blocks 1110 in each computing node 1210, however, particularly with the increase in the number of blocks 1110 can lead to the issues described above.

Figure 3 schematically illustrates various nodes 1210, 2231, 2232 of a distributed network 2200A for implementing a distributed database. In this implementation, in addition to what has been described with reference to figure 2, the distributed network 2200A further comprises a distributed common storage 2230, comprising one or more distributed common storage nodes 2231, 2232. In this exemplary implementation two distributed common storage nodes DCS₁ and DCS₃ are illustrated, it will however be clear that any number of distributed common storage nodes can be implemented. The distributed common storage nodes 2231, 2232 can generally be implemented by any computing device comprising at least a memory and a processor, such as, for instance, a PC, a smartphone, etc.

Generally, the distributed common storage 2230 allows storing of one or more of the block 1110, so that local storage requirements of the computing nodes 1210 can be lowered. That is, the amount of data to be stored at each computing nodes 1210 can generally be lowered, since the blocks can be stored in the distributed common storage 2230 instead.

In the following, when reference is made to the distributed common storage 2230, it can be interpreted as meaning the plurality of distributed common storage nodes 2231, 2232 together. Several manners are known for operating a plurality of nodes 2231, 2232 as a common storage 2230, such as in cloud storage and/or server storage applications, and those can be implemented for the distributed common storage 2230 as well.

In some embodiments, all of the plurality of nodes 2231, 2232 comprise the same blocks, thus providing an increased redundancy and failure-safe mechanism, as well as an increased bandwidth when accessing the distributed common storage 2230. It will however be clear that the invention is not limited to this implementation and the data stored in the various nodes 2231, 2232 could be different from node to node, in manners which allow redundancy to be achieved with a reduced storage use.

In some preferred embodiments, the number of distributed common storage nodes 2231, 2232 is lower than the number of computing nodes 1210. In this manner, even if each of the distributed common storage nodes 2230 were to store the same blocks previously stored in each of the computing nodes 1210, 2210 the total storage requirements for distributed network 2200A would still be lower than for distributed network 1200.

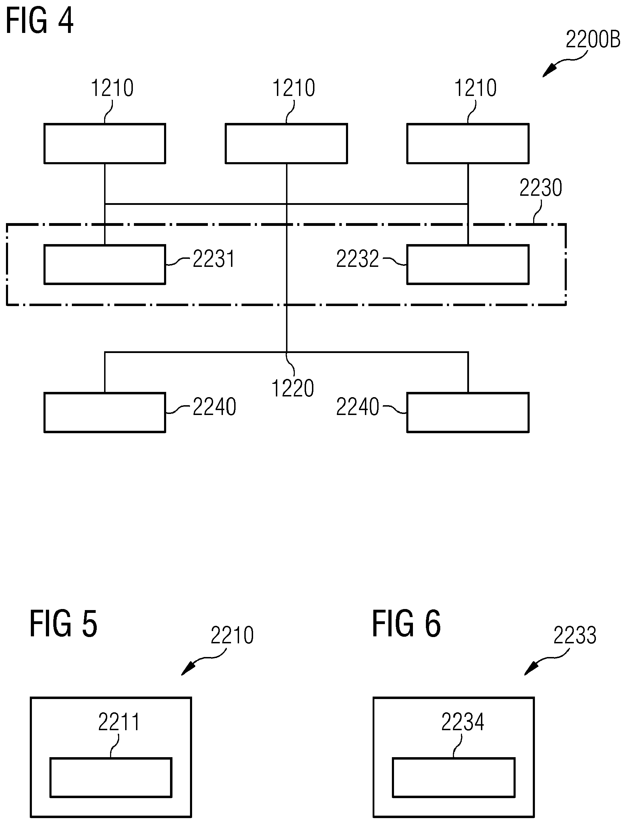

Figure 4 schematically illustrates various nodes 1210, 2231, 2232 and 2240 of a distributed network 2200B for implementing a distributed database. In this implementation, in addition to what has been described with reference to figures 2 and 3, the distributed network 2200B further comprises consortia governing nodes 2240. In this exemplary implementation two consortia governing nodes CGN₁ and CGN₃ are illustrated, it will however be clear that any number of consortia governing nodes can be implemented. In some preferred embodiments, the number of consortia governing nodes 2240 is at least two. The consortia governing nodes 2240 can generally be implemented by any computing device comprising at least a memory and a processor, such as, for instance, a PC, a smartphone, etc.

Generally, the consortia governing nodes 2240 allow the management of where the one or more of the blocks 1110 are stored between the computing nodes 1210 and the distributed common storage nodes 2230, as will result more clearly from the following description.

Figure 5 schematically illustrates a computing node 2210, which can be a possible implementation of the computing node 1210. In this implementation, the computing node 2210 comprises a local storage 2211, for storing one or more of blocks 1110. The local storage 2211 can be any kind of storage connected to the computing node 2210, in particular the memory or hard-drive of the computing node 2210.

Figure 6 schematically illustrates a distributed common storage node 2233, which can be a possible implementation of one or more any of the nodes 2231, 2232 of the distributed common storage 2230. In this implementation, the distributed common storage node 2233 comprises a cache 2234, for storing one or more of blocks 1110. Although not illustrated, it will be clear that the distributed common storage node 2233, as well as any of the nodes of the distributed common storage 2230, can further comprise storing means other than the cache 2234 for storing one or more of blocks 1110. The additional presence of the cache 2234 allows for some of the blocks 1100 stored in the cache 2234 to be accessed more quickly than the blocks stored in the storing means. That is, the cache 2234 can have a faster operation than the remaining storing means of the distributed common storage node. In some embodiments, the cache 2234 can be alternatively associated to a computing node 1210, 2210.

The general purpose of the cache 2234 can be understood to be caching of blocks which are agreed to be moved to the distributed common storage 2230 so as to have faster local access to some specific blocks.

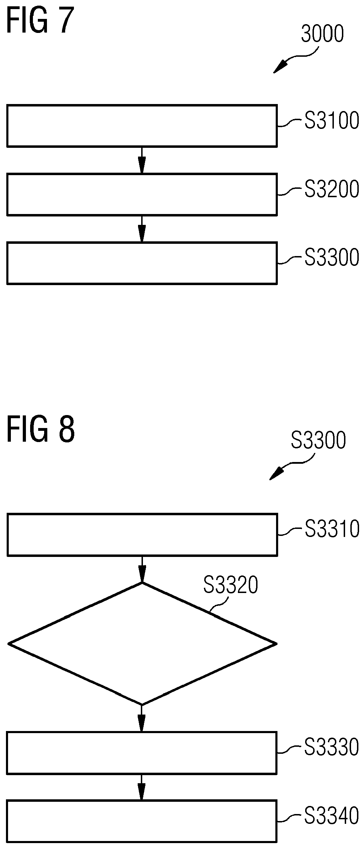

Figures 7 to 16 schematically illustrates various steps of a method 3000 for managing storage of blocks of a distributed database. It will be understood that not all steps illustrated are necessary for implementing the invention.

As can be seen in figures 7 and 8, method 3000 for managing storage of blocks 1110 of a distributed database 1100, can comprise a step S3100 of obtaining one or more storage rules for defining use of local storage 2211 of a computing node 2210 of the distributed database. The step S3100 can, in some embodiments, be carried out by any of nodes 1210, 2210, 2231-2233 and 2240.

In some embodiments, the one or more storage rules can be predetermined at the time of setting up of the distributed database 1100 and saved in the distributed database 1100. During runtime of the distributed network, preferably through consensus of the computing nodes 2210, the storage rules can also be amended. In this case, rules regulating how consensus for the amendments is implemented can also be given in the first block B₀, for instance as part of the storage rules.

Preferably, in some embodiments, the one or more storage rules can be stored in the first block B₀ of the distributed database 1100. The stop S3100 of obtaining the storage rules can thus be implemented by any node of the distributed network by downloading the block in which the storage rules are stored. It will be however clear that the storage rules can be stored also outside of the distributed database 1100, with the storage accessible by the nodes of the distributed network, for instance through the network connection 1220. Still alternatively, or in addition, the storage rules can be obtained by a given node in step S3100 by inputting them and/or otherwise transferring them to the node, for instance through action of a user of the node and/or a removable storage media.

In some embodiments, the one or more storage rules can comprise a maximum amount of blocks 1110 to be stored in the local storage 2211. In the following this will be referred to a MAX_{SN}. Generally, the value of MAX_{SN} is considered to be a global variable for the entire network. However, in some cases, the value of MAX_{SN} might be different for different computing nodes 1210, 2210. For instance, some might have a larger amount of storage and want to have quick access, some nodes might have a lower amount of storage.

Alternatively, or in addition, in some embodiments, the one or more storage rules can comprise a minimum amount of blocks stored in the local storage 2211 after which blocks can be stored in the distributed common storage 2230. This also defines the minimum size of the local storage 2211. In the following this will be referred to a MIN_{SN}. This can ensure, for instance, that at least MIN_{SN} blocks are stored locally, since those might not yet be stored in the distributed common storage 2230. MIN_{SN} can be considered to be global variable, with one value for the whole distributed network. In some embodiments, when a new computing node joins the distributed network, if its storage capacity is lower than MIN_{SN}, MIN_{SN} can be maintained at the same value. If the storage capability of the new node is smaller than MIN_{SN}, then MIN_{SN} can be updated based on the storage capability of the new computing node.

Still alternatively, or in addition, in some embodiments, the one or more storage rules can comprise an address of the distributed common storage 2230. In particular, in some embodiments, each of the plurality of distributed common storage node 2231, 2232 connected in the network can have its own address. At the same time, or alternatively, a single address can be available for the distributed common storage 2230. Depending on implementation, for instance it the distributed common storage 2230 is realized as a central storage, this address can be a specific address such as IP, DNS name, etc. for the distributed common storage 2230. Alternatively, or in addition, in a distributed and/or decentralized setup, any of the distributed common storage nodes 2231, 2232 can be used as an access gateway to the distributed common storage 2230, so that the address of the node operating as gateway can be considered to be the address of the distributed common storage 2230. In some cases this could be one which is owned by the same legal entity than the computing node transferring/accessing the storage. Both solutions, centralized and decentralized, can preferably use cryptographic measures for storage of transactions to ensure immutability and tamperproof storage.

Still alternatively, or in addition, in some embodiments, the one or more storage rules can comprise a size of a cache 2234 of the distributed common storage 2230.

In addition to the numerical values stored in the storage rules, operation of the invention can also be determined by storage capabilities of the computing nodes 1210, 2210. In particular, different computing nodes 1210, 2210 can have different storage capabilities. The storage capabilities of a given computing node 1210, 2210 will be generally referred to as MVB, in the following description.

The method 3000 can further comprise a step S3200 of generating a new block 1110. This step can be executed by one or more of the computing nodes 1210, 2210. The generation of the block can generally be performed in accordance with the rules of the distributed database. For instance, a new block 1110 can be generated after a predetermined time and/or after a predetermined number of transactions to be recorded in the distributed database.

The method 3000 can further comprise a step S3300 of storing the new block 1110. In particular, the step S3300 of storing the new block 1110 can comprise a step S3310 of storing the new block 1110 in the local storage 2211 of the computing node 2210, and a step S3320 of evaluating use of the local storage 2211, based on the one or more storage rules. All those steps can be executed by one or more of the computing nodes 1210, 2210.

For instance, in some embodiments, at step S3320 it can be evaluated whether the local storage 2211 contains a number of blocks 1100 which is equal to or higher than.

Based on a result of the evaluating step S3320, the method 3000 can further comprise a step S3330 of copying one or more blocks 1100, prior to the new block, to the distributed common storage 2230. This step can be executed by the distributed common storage 2230.

In general, the decision to copying the one or more blocks 1100 to the distributed common storage 2230 is taken when the evaluating step S3320 indicates that use of the local storage 2211 is higher than what is defined by the one or more storage rules. With reference to the example provided above, if it is determined that the local storage 2211 contains a number of blocks 1100 which is equal to or higher than, MVB then the method can proceed to step S3330.

If, on the other hand, at the evaluating step S3320 it is determined that the local storage 2211 use does not require, or allow, the copying of blocks to the distributed common storage 2230, then the method can stop at step S3320.

In some embodiments, the method 3000 can further comprise a step S3340, after step S3330, of removing from the local storage 2211 the one or more blocks 1100 which have been copied to the distributed common storage 2230 at step S3330. In this manner it is advantageously possible to ensure that the local storage use is maintained to an efficient level. This step can be executed by the one or more computing node 1210, 2210, from which the blocks have been copied.

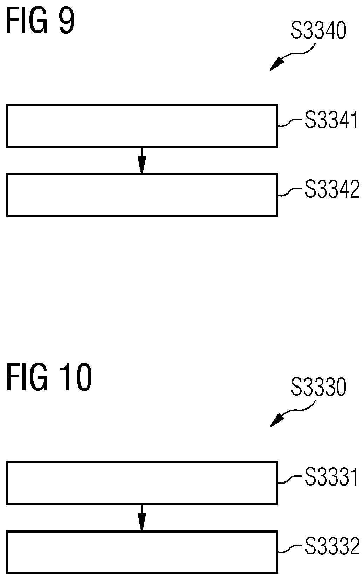

As illustrated in figure 9, in some embodiments, the step S3340 can comprise a step S3341 of acknowledging that the one or more blocks 1100 have been successfully copied to the distributed common storage 2230, and a step S3342 of removing from the local storage 2211 the one or more blocks 1100 copied to the distributed common storage 2230. In this manner it can be advantageously ensured that the blocks are removed from the local storage 2211 only after they have been correctly copied into the distributed common storage 2230. This step can be executed by the distributed common storage 2230.

In the description above, reference has been generally made to one or more blocks 1110 which are transferred from the local storage 2211 to the distributed common storage 2230. It will be clear to those skilled in the art that the identification of blocks to be transferred can be based on the one or more storage rules.

For instance, if the local storage 2211 contains a number of blocks 1100 which is equal to or higher than a value defined based on the storage rules, and/or based on the storage capabilities of the corresponding computing node, such as those defined by MVB, a predetermined number of blocks could be transferred to the distributed common storage 2230. In some embodiments, the predetermined number of blocks could be defined as part of the storage rules. Alternatively, or in addition, the number of blocks to the transferred could be a predetermined percentage of the blocks stored in the local storage 2211. In some embodiments, the predetermined percentage could be defined as part of the storage rules.

Still alternatively, or in addition, the number of blocks could be determined based the storage rules values, such as MAX_{SN} and/or MIN_{SN} and/or based on the local storage capabilities, such as MVB, for instance based on the value - (MVB - MIN_{SN}). Even more specifically, considering the blocks stored in the local storage as an array, all blocks from an initial index of the array to a second index of the array could be determined to be transferred to the distributed common storage 2230. In some embodiments, the second index could correspond to the value -(MVB - MIN_{SN}).

Thus, as illustrated in figure 10, in some embodiments, the step S3330 of copying can comprise a step S3331 of identifying the one or more blocks 1100 to be stored in the distributed common storage 2230 based on the one or more storage rules, and a step S3332 of copying the one or more blocks 1100 identified at the identifying step S3331 to the distributed common storage 2230. Step S3331 can be executed by the one or more computing node 1210, 2210, from which the blocks are to be copied while step S3332 can be executed by the one distributed common storage 2230. The identification of the blocks to be transferred in step S3331 can be implemented in any of the manners described throughout the description, in particular those described above.

For instance, the following could be one possible pseudo-code implementation of the steps S3331 and S3332:

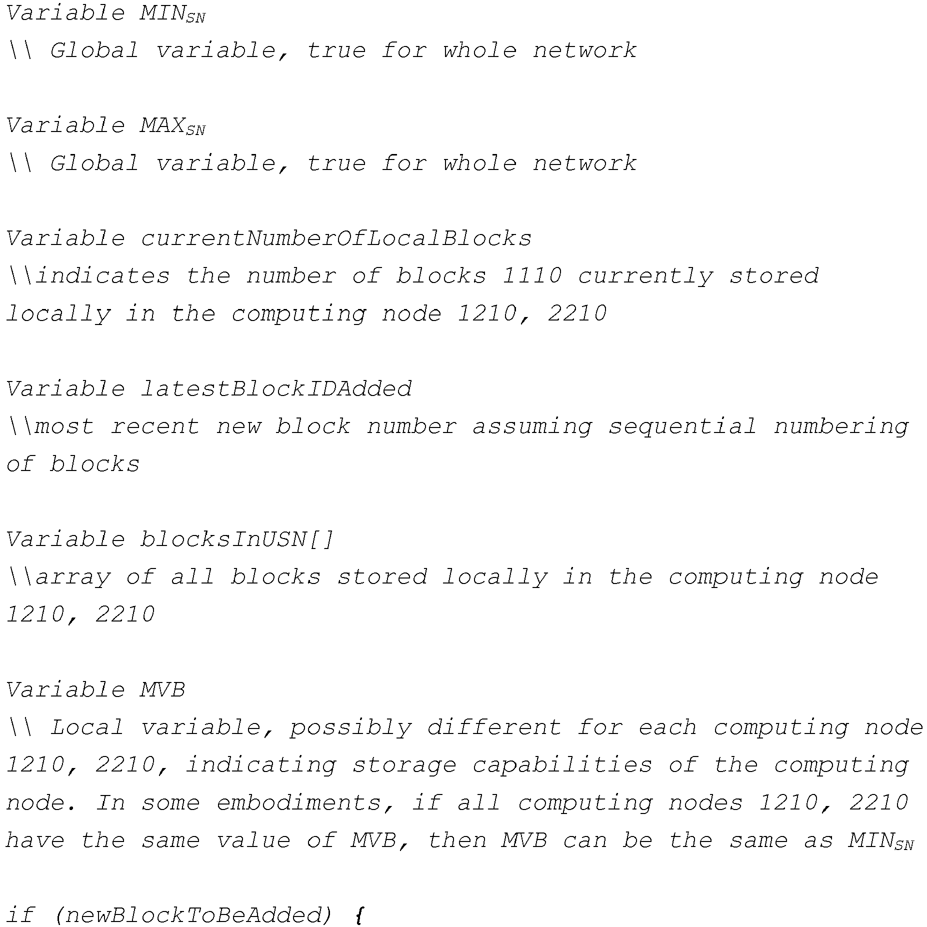

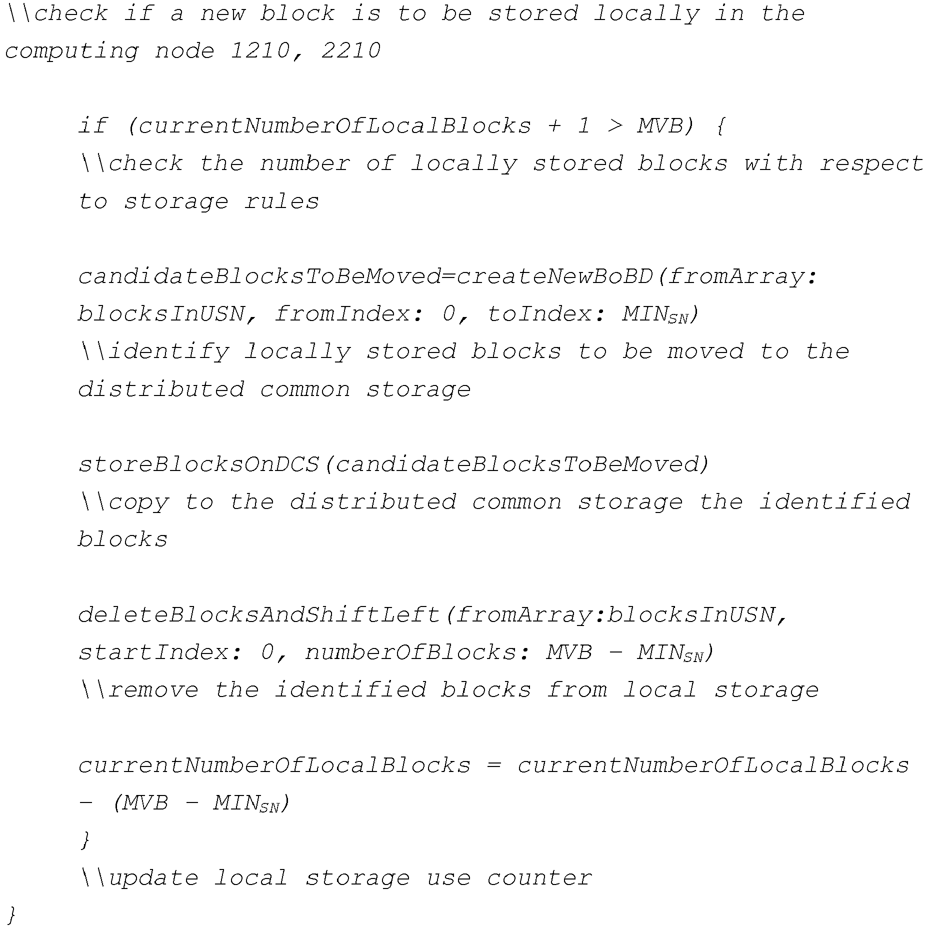

With reference to the pseudo-code above, in embodiments comprising step S3341, the relevant pseudo-code could be additionally implemented as

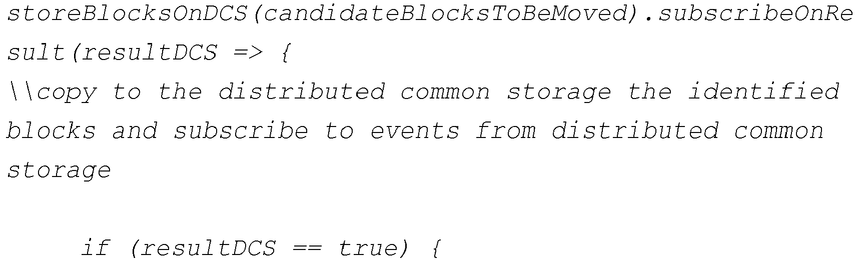

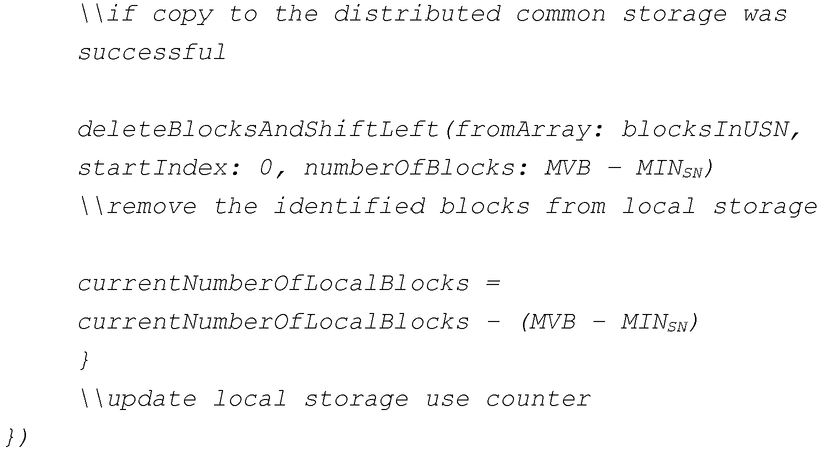

Moreover, with reference to the pseudo-code above, in embodiments in which the new block is published for consensus by the distributed network prior to being registered, the relevant pseudo-code for step S3310 could be additionally implemented as

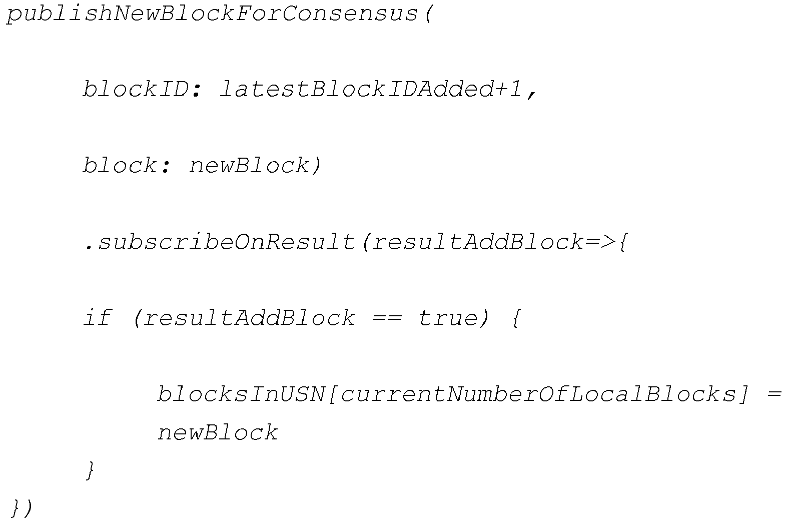

A possible combination of the various pseudo-codes above can be implemented as

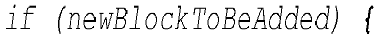

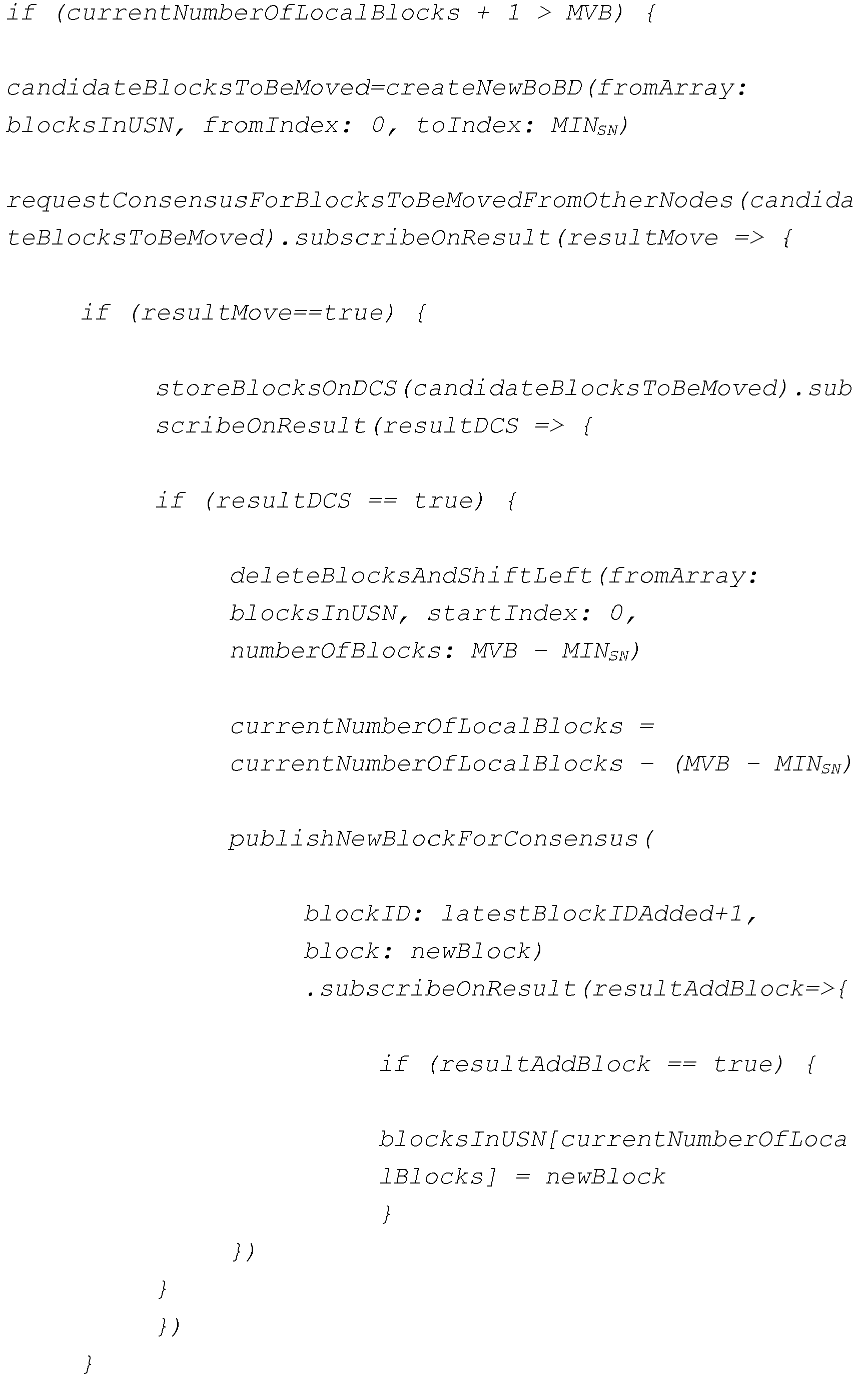

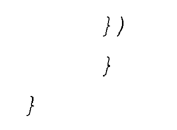

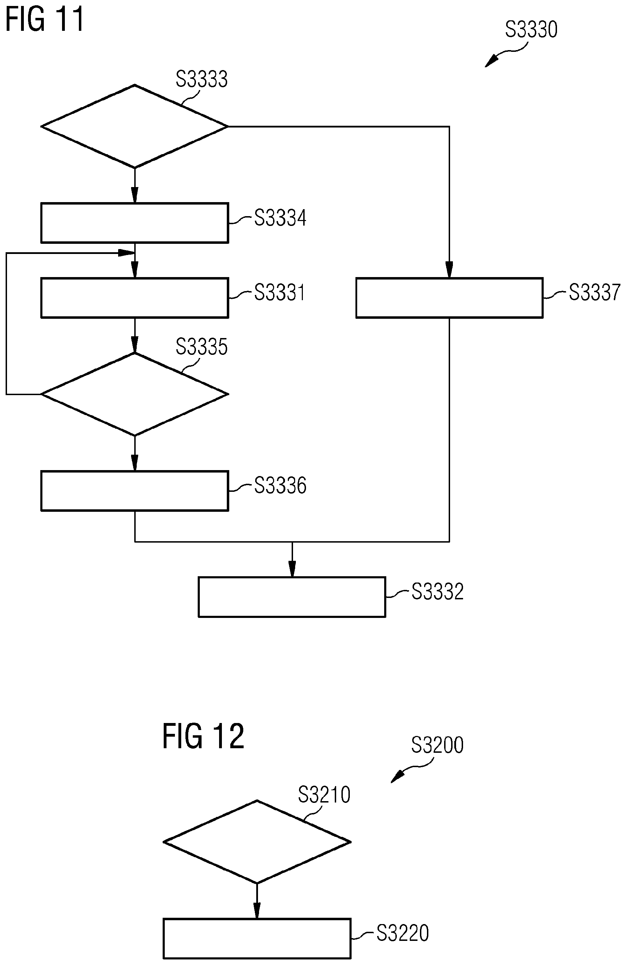

In the following, an alternative possible manner for selecting which blocks 1100 are to be stored in the distributed common storage 2230 is discussed with reference to figure 11.

In particular, in some embodiments, the copying step S3330 can comprise a step S3333 of evaluating whether storage capabilities, for instance MVB, is common to a plurality of computing nodes 1210, 2210 of the distributed database. In some embodiments, the plurality of computing nodes 1210, 2210 of the distributed database can comprise all computing nodes 1210, 2210 of the distributed database. Step S3330 can be carried out by one or more of the computing nodes 1210, 2210.

Based on a result of the evaluating step S3333, in particular if it is determined that the storage capabilities are common to the plurality of computing nodes 1210, 2210, then the method can proceed to a step S3337 of identifying the one or more blocks 1100 to be stored in the distributed common storage 2230 based on the one or more storage rules. Here, the operation of step S3337 based on the one or more storage rules can be carried out as previously described for step S3331, the main difference being that it is implemented by one or more of the consortia governing nodes 2240.

Alternatively, or in addition, in some embodiments, step S3337 can comprise the identification of at least enough blocks 1110 such that MIN_{SN} is not overwhelmed for computing nodes having low storage capabilities, such as, for instance IoT devices. That is, in come embodiments, the consortia governing nodes 2240 can define a value of *MIN_{SN}* small enough so that computing node having the lowest storage capabilities can have sufficient space left for new blocks.

For instance, in a configuration with three computing nodes,
Node 1: MVB = 10 blocks,
Node 2: MVB = 5 blocks,
Node 3: MVB = 3 blocks,
the value of MIN_{SN} can be set to correspond to the lowest value of MVB, here 3 blocks. Moreover, since the values of MVB are different for different nodes, when the identification of the blocks is carried out it is possible for the consortia governing nodes 2240 to set the number of blocks identified to be 3 or more blocks, so that Node 3 does not get full and can't store data anymore.

On the other hand, still based on a result of the evaluating step S3333, in particular if it is determined that the storage capabilities are common to the plurality of computing nodes 1210, 2210, then the method can proceed to a step S3334 of selecting one of the plurality of computing nodes 1210, 2210. In some embodiments, the selection can be performed randomly among the plurality of computing nodes 1210, 2210. In particular, in this case, since the storage capabilities are common, it does not make a difference which computing node 1210, 2210 proceeds with the identification of the blocks since all the nodes share the same storage capabilities. The selection of the computing node can be implemented, for instance, by any of the consortia governing nodes 1240 randomly choosing any of the computing nodes 1210, 2210. In some cases the selection could be communicated to other consortia governing nodes 1240.

The selected computing node can then carry out a step S3331 of identifying the one or more blocks 1100 to be stored in the distributed common storage 2230. Here, the operation of step S3331 can be implemented based on the one or more storage rules as previously described.

After the blocks 1100 have been identified, in step S3331, a step S3335 of voting on the one or more blocks 1100 to be stored in the distributed common storage 2230, is performed. The voting step can be carried out by the consortia governing nodes 2240. In some embodiments, the voting step can be implemented by a majority approach, in which the voting is considered to be positive if a majority of the voting nodes votes positively, and negative otherwise. It will however be clear that alternative voting approaches can be implemented, for instance by using a voting threshold different from 50%. In some embodiments, rules determining the voting step S3335 can be stored in the distributed database, preferable as part of the one or more storage rules.

Generally, the purpose of the voting step S3335 is to evaluate whether the blocks 1100 identified at step S3331 are to be considered acceptable. In particular, the amount of identified blocks 1110 should be large enough to relieve the computing nodes 1210, 2210. The consortia governing nodes 2240 can vote against the proposal because they generally consider it incorrect in terms of size, or because they consider it contains different transactions compared to the transactions the majority believes it should have. For instance, a proposal can be voted against if a node proposes a transfer of number of blocks to the distributed common storage which is not matching the current transfer rules. In particular, since there is no central governance in the distributed network, a distributed consensus mechanism based on voting can allow the system to deal with issues introduced either by mistake, or willingly, by one or more of the computing nodes.

Based on a result of the voting step S3335, in particular if the outcome is positive, a step S3336 of signing on the one or more blocks 1100 to be stored in the distributed common storage 2230 is implemented. The signing step can be carried out by the consortia governing nodes 2240. In some embodiments, step S3336 could also be present after step S3337 and before step S3332.

The general purpose of the signing step S3336 is to ensure that the blocks which are copied to the distributed common storage 2230 can later be authenticated by any node of the distributed network. To this effect, various signing approaches can be implemented, such as, for instance, based on a public/private key. In some embodiments, one or more, preferably all, of the consortia governing nodes 2240 which voted for the identified blocks can proceed to carry out the signing step.

Following the signing step S3336, one or more blocks 1100 signed at the signing step S3336 can be moved to the distributed common storage 2230 by means of a step S3332 of copying, as previously described. Moreover, it will be clear that the signing step S3336 can also be implemented prior to the copying step S3330, S3332 in the previously described embodiments, such as those described with reference to figures 8 and 9.

In this manner, if a computing node 1210, 2210, is not functioning properly, either by accident or willingly, the selection of a new random computing node can ensure that sooner or later a selection of blocks is carried out which can be voted positively by the consortia governing nodes, ensuring the distributed network operates correctly.

In the description above, the generation of a new block has been generally described with reference to figure S3200. In particular, in some embodiments, the generation of the new block might be performed in manners known to be implemented for known distributed databases and known distributed networks.

In general, executing all transaction available in all the blocks in the distributed database will lead to an overall state of the distributed database, at a certain point in time. Each new transaction alters this state. Thus, if it becomes necessary to modify a state, for instance to compute and/or record a transaction, one generally need to know the current state, which in turns generally depends on a set and/or sequence of older transactions.

In the present case, those older transactions can be stored either locally or in distributed common storage. In the following, with reference to figures 12 to 15, several embodiments will thus be described which allow the execution of a transaction to be carried out in a distributed database in which blocks 1110 can be stored locally or in distributed common storage.

In particular, as visible in figure 12, the step S3200 of generating the new block 1110 can comprise a step S3210 of evaluating whether a transaction to be recorded in the new block 1110 is dependent on a state of the distributed database. This step can be carried out by the computing node 1210, 2210.

In particular, some transactions might be dependent on a previous state of the distributed database 1100, while some might not. The latter ones can comprise, for instance, transactions which introduce a new variable in the distributed database 1100, or which set an existing variable of the distributed database 1100 to a predetermined value, independent of the state of the distributed database 1100. The former ones can comprise transactions which have among their inputs a status of at least part of the distributed database 1100.

It will be clear that the reference to "the state" can be interpreted as to mean a state of the blockchain which can be computed by the computing node 1210, 2200, for instance be executing one or more transactions in one or more blocks 1110. One possible example of this is the blockchain implementation of bitcoin. In this case, reading the state of the distributed database can be implemented by reading one or more blocks of the distributed database, which are necessary for the computation of the required state. Alternatively, or in addition, "the state" can be calculated and regularly stored in the distributed database 1100. One possible example of this is the blockchain implementation of Ethereum. In this case, reading the state of the distributed database can be implemented by reading one or more blocks of the distributed database, which provide the required state.

Based on a result of the evaluating step S3210, in particular in case it is evaluated that the transaction is not dependent on a previous state of the distributed database 1100, the step S3200 can comprise a step S3220 of generating the new block 1110. This step can be carried out by the computing node 1210, 2210.

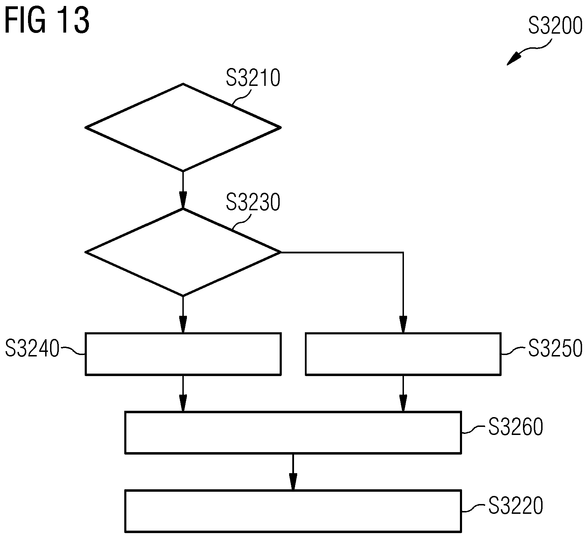

Alternatively, as visible in figure 13, based on a result of the evaluating step S3210, in particular in case it is evaluated that the transaction is dependent on a previous state of the distributed database 1100, the step S3200 can comprise a step S3230 of evaluating whether the state of the distributed database 1100 on which the transaction is dependent on is stored in the local storage 2211 or not. Thanks to this, it can be determined whether the state is available or can be computed from the blocks stored in the local storage or not. This step can be carried out by the computing node 1210, 2210.

Here it is noted that it is generally known how, given a transaction, it is possible to determine which blocks are needed to compute the new state of the blockchain. That is, the latest transaction which sets the state value of a state variable is needed to compute that state value. This transaction can be identified by going back through all involved transactions. If the required transactions are in the local storage this can be achieved locally. If not reference is made to the blocks in the distributed common storage.

As further visible in figure 13, based on a result of the evaluating step S3230, in particular in case it is evaluated that the state of the distributed database 1100 is not locally available, or not completely locally available for instance in case where multiple blocks are needed and only some are locally stored, the step S3200 of generating the new block 1110 can then further comprise a step S3240 of reading the state of the distributed database 1100 from the local storage 2211.

Alternatively, or in addition, based on a result of the evaluating step S3230, in particular in case it is evaluated that the state of the distributed database 1100 is locally available, the step S3200 of generating the new block 1110 can then further comprise a step S3250 of reading the state of the distributed database 1100 from the distributed common storage 2230.

In some embodiments, in case the state requires reading of blocks from both the local storage 2211 and the distributed common storage 2230, both steps S3240 and S3250 can be implemented for the respective blocks.

In both cases, after reading the state the step S3200 can the further comprise a step S3260 of executing the transaction and a step S3220 of generating the new block. The step S3260 of executing the transaction can, in particular, comprise the computation of the required state, based on the blocks read at steps S3240 and/or S3250. Step S3260 can furthermore comprise the computation of the modification of the state caused by the transaction which is currently being executed. In step S3220 a block is generated based on the new state and it is recorded in the distributed database.

All steps illustrated in figure 13, except for the step S3250, can be carried out by the computing node 1210, 2210. Step S3250 can be carried out by the distributed common storage 2230.

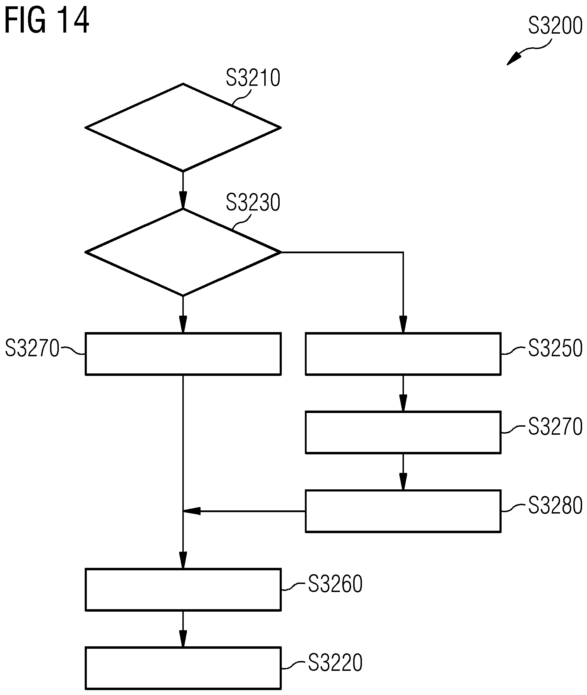

Figure 14 illustrates a further possible outcome of evaluating step S3210. In this case, In particular, some transactions might be dependent on a previous state of the distributed database 1100, as well as requiring previous states, or previous blocks of the distributed database, to be modified.

Also in this case it is necessary to determine whether the previous blocks, or state, of the distributed database is locally stored or not, which is carried out in step S3230, as previously described.

Based on a result of the evaluating step S3230, in particular if the state or blocks are deemed to be locally stored, the step S3200 of generating the new block 1110 can then further comprise a step S3270 of updating the state of the distributed database 1100 on the local storage 2211. Moreover, the transaction is executed in a step S3260 and a new block is generated, as previously described. In some implementations, in particular where the update of the older state requires the execution of the transaction, step S3260 can be executed prior to step S3270.

Alternatively, or in addition, in particular if the state or blocks are deemed not to be locally stored, the step S3200 of generating the new block 1110 can then further comprise a step S3250 of reading the state of the distributed database 1100 from the distributed common storage 2230, and a step S3270 of updating the state of the distributed database 1100 on the local storage 2211. In this manner it is then possible to further proceed with steps S3260 and S3220 as previously described, locally on the computing node 1210, 2210.

In some implementations, the method can further comprise a step S3280 of removing the state, or blocks related thereto, from the cache 2234 after this has been read in step S3250, so as to avoid having information on the cache 2234 which is not up to date.

All steps illustrated in figure 14, except for step S3250 and S3280, can be carried out by the computing node 1210, 2210. Steps S3250 and 3280 can be carried out by the distributed common storage 2230.

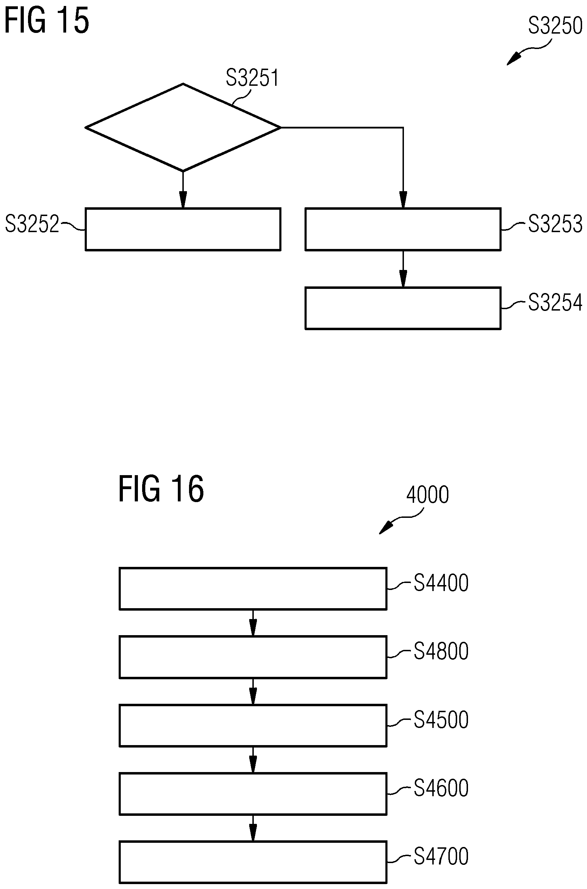

In the description above, it has been considered that the reading operations from the distributed common storage 2230 are performed on blocks which generally stored in the distributed common storage 2230, independently on whether those are stored in the cache 2234 of the distributed common storage 2230 or not. Figure 15 illustrates embodiments in which the cache 2234 is implemented and possible manners of operating it.

In particular, the step S3250 of reading can comprise a step S3251 of evaluating whether the state of the distributed database 1100 is stored in the cache 2234 of the distributed common storage 2230. Based on a result of the evaluating step S3251, particularly if it is determined that the state is stored in the cache 2234, a step S3252 of reading the state of the distributed database 1100 from the cache 223 can be implemented. Alternatively, or in addition, based on a result of the evaluating step S3251, particularly if it is determined that the state not is stored in the cache 2234, a step S3253 of reading the state of the distributed database 1100 from the distributed common storage 2230, can be implemented. Here, reading from the distributed common storage 2230 is intended as reading from storage means of the distributed common storage 2230 other than the cache 2234. In some embodiments, this can be followed by a step S3254 of copying the state of the distributed database 1100, which has been read at step S3253, to the cache 2234. In this manner it is ensured that a state which has apparently become relevant in the computation of the distributed database 1100 can be quickly retrieved.

All steps illustrated in figure 15 can be carried out by the distributed common storage 2230.

In the above it has been assumed that the distributed common storage 2230 has a substantially stable configuration during the operation of method 3000. In some embodiments, however, the distributed common storage 2230 can store a large number of blocks, or a large number of new nodes can join the distributed network increased the read/write accesses to the distributed common storage 2230, so that operation of the distributed common storage 2230 can be slowed down.

In order to avoid this slowing down, in some embodiments at least part of, or the entire content of, the distributed common storage 2230 can be duplicated. This can be implemented, for instance, by increasing the number of distributed common storage nodes 2231, 2232. The decision on when this is performed could be based on the number of blocks stored in the distributed common storage 2230. In particular, a predetermined number of blocks could be provided, for instance as part of the storage rules, after which the size of the distributed common storage 2230 is increased. In some embodiments, the decision on whether to perform the duplication can be voted by the consortia governing nodes 2240, with a voting approach as previously described.

In the above it has been assumed that computing nodes 1210, 2210 are already part of the distributed network implementing the distributed database 1100. There can however be often cases in which new nodes join the distributed network. The following description, in particular with reference to figure 16, will relate to how those new nodes can join the network with reference to a method 4000. It will be clear that, in some implementations, the steps of method 4000 can be combined with one or more of the steps of method 3000.

In particular, a method 4000 for managing storage of blocks (1110 of the distributed database 1100, can comprise a step S4400 of joining the distributed network 2200A, 2200B by a computing node 1210, 2210 of the distributed database. The step S4400 can be implemented in known manner according to the specific implementation rules of the distributed database 1100. This step can be carried out by the computing node 1210, 2210.

The method 4000 can further comprise a step S4500 of obtaining one or more storage rules for defining use of the local storage 2211 of the computing node 2210. This step can be carried out by the computing node 1210, 2210. The storage rules can be obtained, depending on their storage location, by downloading one or more blocks or as previously described.

The method 4000 can further comprise a step S4700 of downloading one or more blocks of the distributed database 1100 from the distributed common storage 2230, based on the one or more storage rules. This step can be carried out by the computing node 1210, 2210.

An exemplary pseudo-code implementation for steps S46600 and S4700 can be:

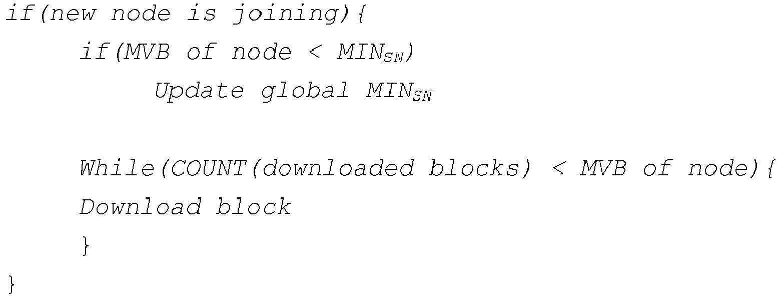

In other words, the new computing node can evaluate its own storage capabilities, such as those defined by MVB, and downloads some latest block till the number of downloaded blocks is less than MVB.

In some embodiments, method 4000 can further comprise a step S4800 of granting read access of the distributed common storage 2230 to the computing node 2210. This can be particularly advantageously implemented in cases in which read access to the distributed database is restricted only to allowed nodes, so that it will be clear that this step does not always need to be carried out. Which nodes can carry out step S48000 depends on the implementation of the distributed network and can be stored, for instance, in the storage rules. For instance it can be defined that one or more computing nodes 1210, 2210 or consortia governing nodes 2240 can grant access, or that a certain number of different nodes need to agree on granting access, or any other consensus algorithm.

Additionally, in some embodiments, method 4000 can further comprise a step S4600 of modifying the storage rules by the computing node 2210. Also in this case, which nodes have the capabilities of modifying the rules, as well as the procedure for doing so, can be defined in the storage rules, for instance in the first, or genesis, block of the distributed database.

It has thus been described how the invention can allow a distributed network to be implemented while making an efficient use of computational resources, and in particular of storage resources, or the various nodes of the distributed network implementing the distributed database.

While the description above has been provided in terms of method steps, it will be clear that embodiments of the invention can further be implemented as software, for instance in the form of instructions recorded on a recording medium, configured to implement any of the method steps described above. Similarly, embodiments of the invention can further be implemented as one or more computing device comprising at least a memory and a processor, the memory comprising the instructions configured to cause the processor to implement any of the method steps described above. It will be clear that different nodes can each be implemented by a computing device, as needed. An exemplary computing device can be, for instance, a general purpose PC, an IoT device, etc.

While the invention above has been described with reference to various figures and various embodiments, each implementing a number of features, it will be clear that the invention is not limited thereto and that alternative embodiments can be implemented by combining one of more features among one or more embodiments within the scope of the invention, as defined by the claims.

## Claims

1. A method (3000) for managing storage of blocks (1110) of a distributed database (1100), the method comprising:
- a step of obtaining (S3100) one or more storage rules for defining use of local storage (2211) of a computing node (2210) of the distributed database,
- a step of generating (S3200) a new block (1110),
- a step of storing (S3300) the new block (1110),
wherein the step of storing (S3300) the new block (1110) comprises:
- a second step of storing (S3310) the new block (1110) in the local storage (2211) of the computing node (2210),
- a step of evaluating (S3320) use of the local storage (2211) based on the one or more storage rules, and
based on a result of the evaluating step (S3320),
- a step of copying (S3330) one or more blocks (1100), prior to the new block (1110), to a preferably distributed common storage (2230).

2. The method according to claim 1, further comprising:
- a step of removing (S3340) from the local storage (2211) the one or more blocks (1100) copied to the distributed common storage (2230).

3. The method according to claim 2, wherein the step of removing (S3340) further comprises:
- a step of acknowledging (S3341) that the one or more blocks (1100) have been successfully copied to the distributed common storage (2230), and
- a second step of removing (S3342) from the local storage (2211) the one or more blocks (1100) copied to the distributed common storage (2230).

4. The method according to any of claims 1 to 3, wherein the step of copying (S3330) comprises:
- a step of identifying (S3331) the one or more blocks (1100) to be stored in the distributed common storage (2230) based on the one or more storage rules, and
- a second step of copying (S3332) the one or more blocks (1100) identified at the identifying step (S3331) to the distributed common storage (2230).

5. The method according to any of claims 1 to 4, wherein the step of copying (S3330) comprises:
- a second step of evaluating (S3333) whether storage capabilities are common to a plurality of computing nodes (2210) of the distributed database, and
based on a result of the second evaluating step (S3333),
- a second step of identifying (S3337) the one or more blocks (1100) to be stored in the distributed common storage (2230) based on the one or more storage rules, or
- a step of selecting (S3334) one of the plurality of computing nodes (2210),
- a step of identifying (S3331) the one or more blocks (1100) to be stored in the distributed common storage (2230) by the selected computing node (2210),
- a step of voting (S3335) on the one or more blocks (1100) to be stored in the distributed common storage (2230), and
based on a result of the voting step (S3335),
- a step of signing (S3336) on the one or more blocks (1100) to be stored in the distributed common storage (2230), and
- a second step of copying (S3332) the one or more blocks (1100) signed at the signing step (S3336) to the distributed common storage (2230).

6. The method according to any of claims 1 to 5,
wherein the step of generating (S3200) the new block (1110) comprises:
- a third step of evaluating (S3210) whether a transaction to be recorded in the new block (1110) is dependent on a state of the distributed database (1100), and
based on a result of the third evaluating step (S3210)
- a second step of generating (S3220) the new block, or
- a fourth step of evaluating (S3230) whether the state of the distributed database (1100) on which the transaction is dependent on is stored in the local storage (2211).

7. The method according to claim 6,
wherein based on a result of the fourth evaluating step (S3230), the step of generating (S3200) the new block (1110) further comprises
- a step of reading (S3240) the state of the distributed database (1100) from the local storage (2211), or
- a second step of reading (S3250) the state of the distributed database (1100) from the distributed common storage (2230).

8. The method according to claim 6,
wherein based on a result of the fourth evaluating step (S3230), the step of generating (S3200) the new block (1110) further comprises
- a step of updating (S3270) the state of the distributed database (1100) on the local storage (2211), or
- a second step of reading (S3250) the state of the distributed database (1100) from the distributed common storage (2230), and
- a step of updating (S3270) the state of the distributed database (1100) on the local storage (2211).

9. The method according to claim 7 or 8,
wherein the second step of reading (S3250) comprises
- a fifth step of evaluating (S3251) whether the state of the distributed database (1100) is stored in a cache (2234) of the distributed common storage (2230), and
based on a result of the fifth evaluating step (S3251)
- a third step of reading (S3252) the state of the distributed database (1100) from the cache (2234), or
- a fourth step of reading (S3253) the state of the distributed database (1100) from the distributed common storage (2230), and
- a step of copying (S3254) the state of the distributed database (1100) to the cache (2234).

10. A method (4000) for managing storage of blocks (1110) of a distributed database (1100), the method comprising:
- a step of joining (S4400) a distributed network (2200A, 2200B) by a computing node (2210) of the distributed database,
- a step of obtaining (S4500) one or more storage rules for defining use of a local storage (2211) of the computing node (2210),
- a step of downloading (S4700) one or more blocks of the distributed database (1100) from a distributed common storage (2230) based on the one or more storage rules.

11. The method (3000) according to claim 10, further comprising:
- a step of granting (S4800) read access of the distributed common storage (2230) to the computing node (2210).

12. The method according to any previous claim,
wherein the one or more storage rules comprise at least one of:
- a maximum amount of blocks to be stored in the local storage (2211), MAX_{SN},
- a minimum amount of blocks stored in the local storage (2211) after which blocks can be stored in the distributed common storage (2230), MIN_{SN},
- an address of the distributed common storage (2230),
- a size of a cache (2234) of the distributed common storage (2230).
